# EUROPEAN PATENT SPECIFICATION

(11) **EP 0 499 887 B1**
(45) Date of publication and mention of the grant of the patent: **02.08.1995**
(21) Application number: 92101944.4
(22) Date of filing: 06.02.1992
(51) Int. Cl.: B60G 9/02, F16F 1/44, B60G 11/48, F16F 3/00

(54) **Crane truck**
Kranwagen
Camion-grue

(30) Priority: 22.02.1991 IT GE910041
(43) Date of publication of application: 26.08.1992
(73) Proprietor: BELOTTI S.P.A., I-16010 Manesseno (Genova) (IT)
(72) Inventor: Lambertini, Umberto, I-16164 Genova (IT); Manzi, Cristiano, I-16162 Genova (IT)
(74) Representative: Porsia, Bruno

(56) References cited:
- WO-A-81/01689
- WO-A-87/02628
- WO-A-89/05742
- DE-A- 1 430 166
- DE-U- 7 735 635
- FR-A- 654 843
- GB-A- 2 056 382
- US-A- 1 453 525
- US-A- 4 683 970
- US-A- 4 756 512

## Description

The object of the invention is a crane truck with its chassis being supported on at least one axle fitted with wheels, particularly with steering wheels, wherein the axle, particularly the axle that carries the steering wheels, is fitted with one or more longitudinal arms which are articulatingly connected to the chassis, so as to be allowed to oscillate about a horizontal axis extending transversally to the chassis, and about a median longitudinal axis. A truck of this type is known from the document WO-A-8 905 742.

The invention aims to provide a crane truck with its chassis being fitted with such suspensions that a very good lateral stability of the crane truck is ensured by the use of not much expensive, extremely simple structural means of limited overall dimensions, as well as an adequate safety against a crane truck turnover, and a suitable springing and optimum steerage of the crane truck, which allows its wheels to be steered over very great turning angles, bein at the same time ensured.

This object is attained by the invention by the combination of the features according to the characterizing part of claim 1.

The advantages as afforded by the invention, primarily reside in an extremely simple construction, and so in a low manufacturing cost, as well as in an easy and quick manner of carrying out any maintenance work, such as the replacing of the elastic suspension members.

From the functional standpoint, the suspension according to the invention, allows to combine the advantages of the known suspensions having four supporting points, that is, with the chassis being supported at two points on the steer axle, with the advantages of the known suspensions having three supporting points, that is, with the chassis being supported at only one point on the steer axle, the drawbacks of these known suspensions being thus eliminated. In the first instance, these advantages actually reside in a very good lateral stability of the crane truck, however with problems of a constructional character and a limitation in the crane truck wheels turning angle being implied, and, in the second instance, an optimum steerage of the crane truck is afforded, owing to its wheels being steearable over very great turning angles, but the fact that the chassis is supported at only one point, does reduce the lateral stablity of the crane truck.

In accordance with the foregoing, the crane truck of the invention has a very good lateral stability, and affords an optimum steerage which allows its wheels to be steered over very great turning angles, without the crane truck stability being compromised, all that at a low constructional expenditure. The particular embodiment of the suspension members and the associated crane truck turnover-preventing devices, which are both integrated into one respective unit, allows to considerably reduce the overall dimensions thereof and to suitably adjust the thresholds of operation of the crane truck turnover-preventing system, so that the crane truck is rendered considerably safer.

Further improvements in the crane truck according to the invention, are the subject of the dependent claims.

The invention and the advantages arising therefrom will appear more in detail from the specification of one preferred embodiment which is shown by way of a non-limiting example in the accompanying drawings, in which:
Figure 1 is a diagrammatic side view showing a crane truck according to the invention.
Figure 2 is a view showing the rear end side of the crane truck according to Figure 1.
Figure 3 is an enlarged view of a detail of the rear axle of the crane truck according to Figures 1 and 2.
Figure 4 is a top view showing the rear axle according to Figures 1 to 3.
Figure 5 is a view showing the rear end side of the rear axle according to Figure 4.
Figure 6 is an enlarged view showing the articulation of the axle with the chassis.
Figure 7 is an axial sectional view showing an integrated unit comprising a suspension member and a crane truck turnover-preventing device.

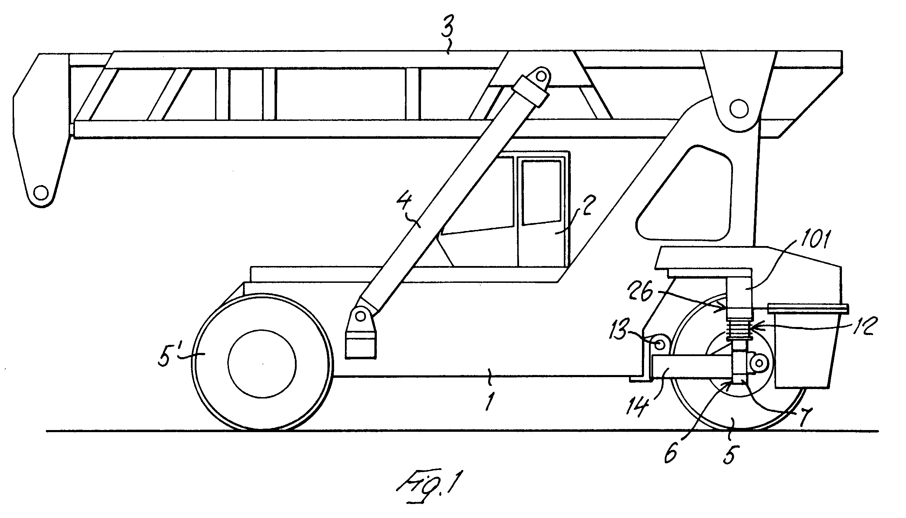

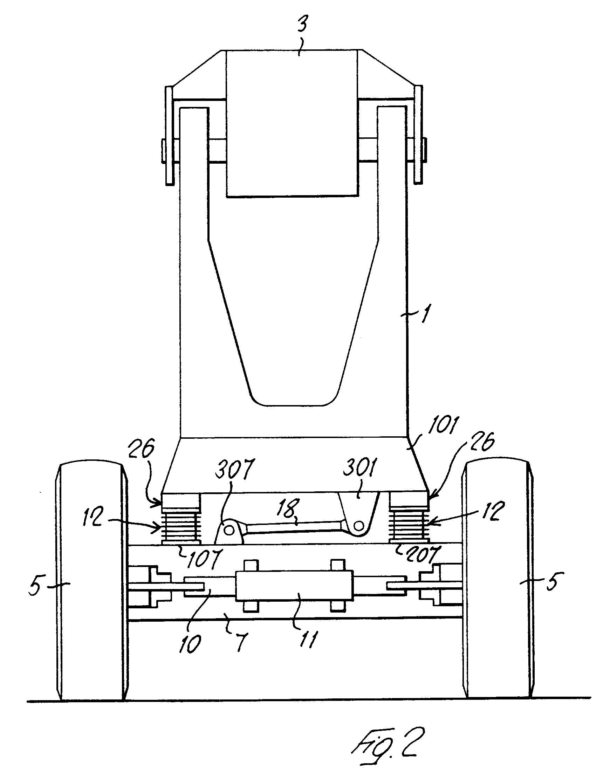

Referring to Figures 1 and 2, there is shown that the crane truck according to the invention, has a chassis 1 that carries an operating cab 2, and a crane boom 3 fitted with lifting devices 4. The boom 3 is pivotally connected to the rear end region of the chassis 1. The front portion of the chassis 1 is supported by one or more wheels 5', and the rear portion thereof is supported by two wheels 5. The rear axle, which as a whole is designated by reference numeral 6, carries the wheels 5 that are the steering wheels, by means of a steering system which is controllable from the operating cab 2.

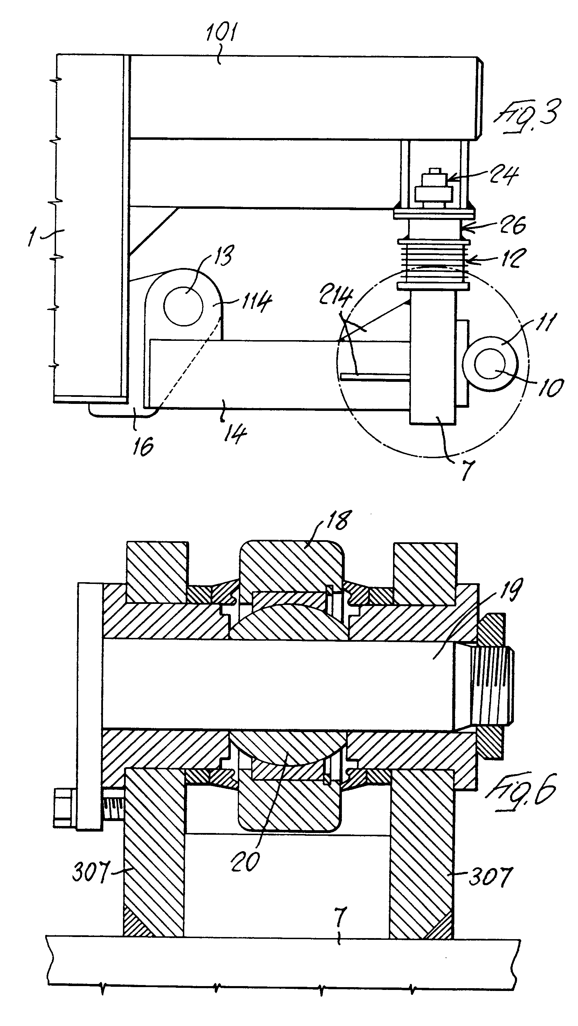

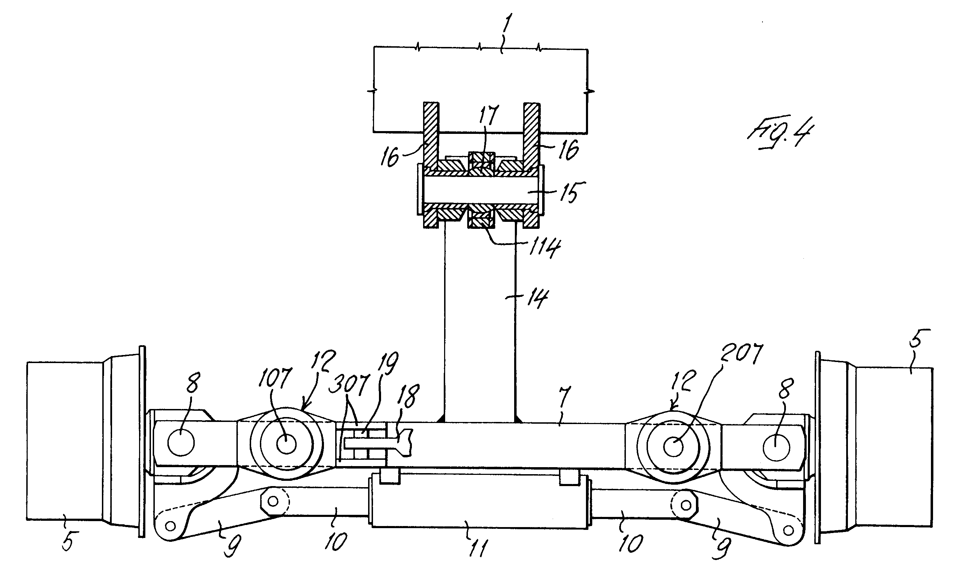

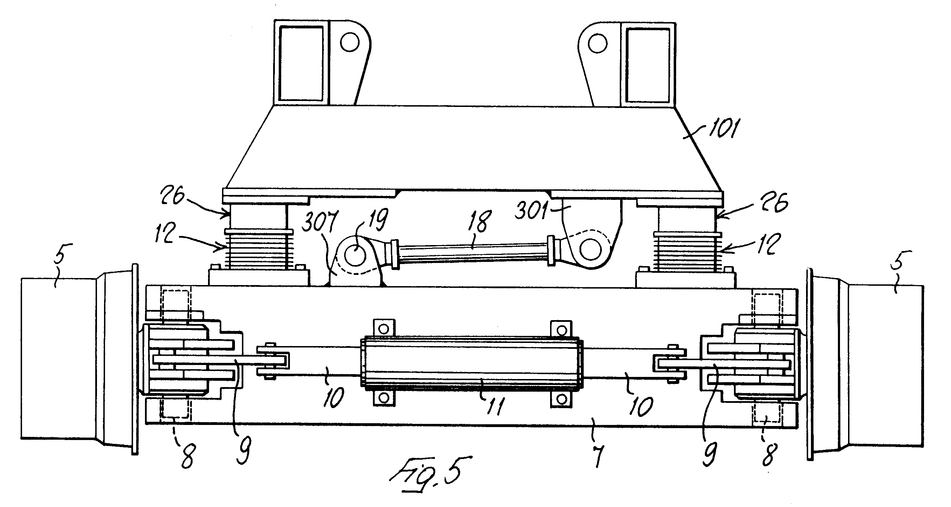

As it clearly appears particularly in Figures 4 and 5, the axle 6 is in form of a strong beam 7 arranged transversally to the chassis 1. Fitted at both ends of beam 7 are the pivots 8 for the steer spindles, each one of which supports the respective steering wheel 5. Each steer spindle pivot 8 is connected through a steering arm 9 to one end of a transversally extending steering rod 10 that is controlled by an actuator 11, particularly by a steering cylinder, or the like.

According to the Figures, the chassis 1 is formed with a rear extension 101 which through elastic suspension members 12 and the associated crane truck turnover-preventing devices 26, is supported on beam 7 at two points 107 and 207 thereof. The two points 107, 207 are spaced apart from each other, and are symmetrically disposed relative to the median longitudinal axis of the chassis 1, i.e., to the middle of beam 7. By means of a longitudinal arm 14, the beam 7 is articulatingly connected at 13 to the chassis 1. The longitudinal arm 14 may be fastened to the beam 7, for example by welding, or it may be even made of one piece therewith. Between the longitudinal arm 14 and the beam 7 several stiffening plates 214 may be provided, which help in increasing the said arm fastening strength.

The articulation means are so provided that the beam is allowed to oscillate in the vertical direction about a horizontal axis being parallel thereto, and to oscillate about the longitudinal axis of arm 14. More particularly, and as shown in Figure 4, the means for articulatingly connecting the longitudinal arm 14 to the chassis 1, is in form of a transversally arranged pivot 15 which by two plates 16 is supported on the chassis 1. Through a ball bearing 17 an extension 114 for fixedly securing the longitudinal arm 14, is engaged with pivot 15. This allows the longitudinal arm 14, and so the beam 7, to perform the above-disclosed oscillatory movements.

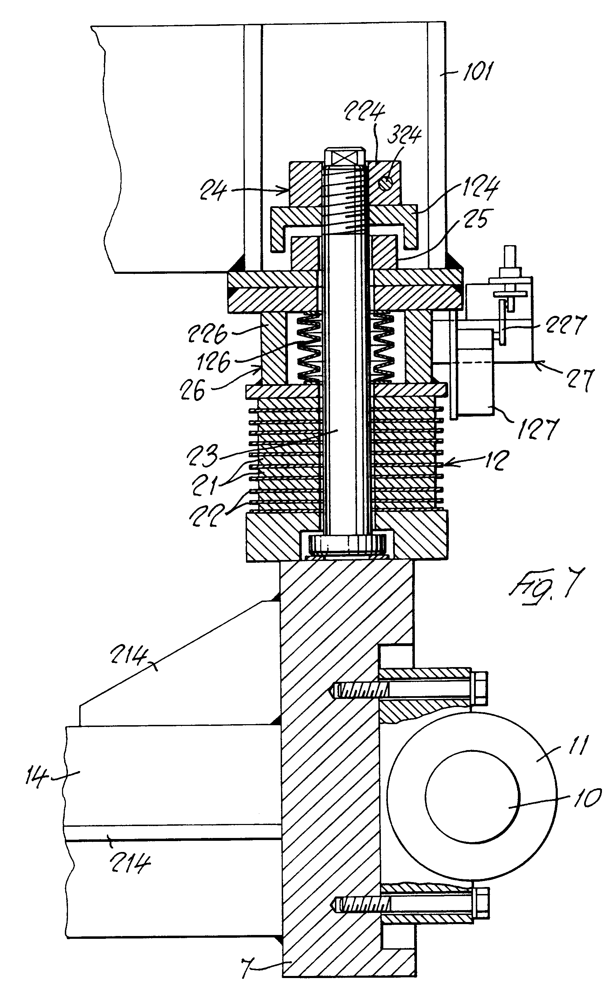

The beam 7 and the chassis 1 are interconnected by a link 18 which by the ends thereof is articulatingly connected respectively to the beam 7 and the extension 101 of the chassis 1. The link 18 is eccentrically articulated to the beam 7 and the supporting extension 101, on opposite sides relative to the center line of beam 7. The means for articulatingly connecting the link 18 to the beam 7 and to the extension 101 are preferably made in a similar manner as the means for articulatingly connecting the longitudinal arm 14 to the chassis 1, and are shown in Figure 6. These means are each in form of a pivot 19 arranged longitudinally of the chassis 1, and carried by ear pairs 307, 301, respectively provided on the beam 7 and the extension 101. The ends of link 18 are each engaged through a ball bearing 20 with the respective pivot 19. The link 18 is thus allowed to oscillate either in a substantially vertical plane, or in any other direction.

According to Figure 7, the two suspension members 12, which are respectively associated with one point 107, 207 at which the extension 101 is supported on beam 7, consist each of a set of springing discs 21. The springing discs 21 are preferably made of rubber or plastics material having adequate elastic properties for the loads to which the crane truck is subjected. Interposed between every pair of successive springing discs 21 is a holding disc 22 of metal, particularly of steel, whereby the peripheral bulging is reduced of the springing discs 22 under the compressive action of a crane truck load. The pack consisting of springing discs 21 and the interposed holding discs 22, is bored through the center thereof, and is threaded on a stud 23 connecting the beam 7 to the respective area of the extension 101 of the chassis 1. The connection stud 23 is made integral with the beam 7, and the extension 101 is so mounted as to be slidable on the said stud, means 24 for limiting the upward travel of extension 101, which advantageoulsy are of the adjustable type, being fitted on the upper end of the connection stud 23. In the shown example, the said means that limit the upward travel of the extension 101 from beam 7, consist of: an abutment member 124 that cooperates with the upper side of the extension 101, a shockproof pad 25 interposed between the extension 101 and the said abutment member 124, a split stop ring 224 screwed on the threaded free end of the connection stud 23, and provided with a screw 324 for the said ring 224 to be tightened on the connection stud 23.

A separate crane truck turnover-preventing device, generally designated by reference numeral 26, is also interposed between each of the suspension members 12 and the extension 101. The said crane truck turnover-preventing device consists of a bushing 226 threaded on the connection stud 23, which by its lower end bears on the suspension member 12, and by its upper end bears against the extension 101. Cup springs 126 also threaded on the connection stud 23, are received in bushing 226. With the crane truck in normal operative conditions, the cup springs 126 are pre-loaded in the direction in which the extension 101 is lifted away from beam 7. Upon the crane truck load on the associated point 107, 207 - at which the extension 101 is supported on beam 7 by means of the respective suspension member 12, having reached a predetermined, crane truck turnover-preventing minimum safety value, the cup springs are pre-loaded to such a degree that these springs will overcome the said load, and by acting on the associated area of extension 101, will lift this extension away from beam 7, and then away from the suspension member 12. Such an uplifting is stopped by the means 24 for limiting the upward travel of the extension 101. Associated with each crane truck turnover-preventing device 26 are means 27 for detecting the upward travel of the extension 101, which signal the uplifting thereof to a crane truck turnover-preventing safety system, whose operation is known, and which may be of any suitable type.

As shown in Figure 7, the means for detecting the upward travel of the extension 101 from beam 7 is in form of a switch with its body 127 being integral with the extension 101 at one of the two points 107, 207 at which this extension is supported on beam 7, while the switching members 227 are adjustably engaged with the crane truck turnover-preventing device 26.

From the above disclosure and from the Figures, the advantages of the crane truck according to the invention, become clearly apparent. These advantages primarily reside in the combination of the advantages as afforded by the crane trucks whose chassis is supported at only one point on the steer axle, with the advantages of the crane trucks whose chassis is supported on the steer axle at two spaced apart points thereof, so that the drawbacks of both of these two constructions are at the same time eliminated. Thus, the crane truck of the invention has a very good lateral stability, and its wheels are steerable over very great turning angles. This is attained thanks to an extremely simple and not much expensive construction. By the integration into one structural unit of the suspension member provided in each point at which the extension 101 of chassis 1 is supported, and of a crane truck turnover-preventing device which is associated with means for limiting, and means for detecting the upward travel of the chassis extension 101, a considerable saving in the overall dimensions is attained, while an easy and quick replacement of any member, particularly of the elastic suspension members, can be carried out. The elastic suspension members in form of sets of springing discs alternated with holding discs, further help to ensure an efficient springing action, jointly with a very good lateral stability of the crane truck. The particular embodiment of the crane truck turnover-preventing devices also ensures a precise adjustment on the crane truck of the threshold of actuation of the locking systems for preventing a crane truck turnover, and guarantees a decided triggering into actuated condition of the means for detecting the upward travel of the chassis extension 101.

Of course the invention is not limited to the just des cribed and shown embodiment, and the same may be widely changed and modified, the more so in construction. The suspension according to the invention, is not limited to the application to a steer axle, and the same may be also applied to other types of vehicles or machines with similar problems. The crane truck chassis may be supported on the steer axle even at any suitable number of chassis-supporting points, and the beam may be fitted with more than one longitudinal arm to be articulatingly connected to the crane truck chassis. The whole without departing from the leading principle as set forth above, and as claimed hereinafter.

## Claims

1. A crane truck with its chassis (1) being supported on at least one axle (6) fitted with wheels, particularly with steering wheels (5), wherein the axle (6), particularly the axle (6) that carries the steering wheels (5), is fitted with one or more longitudinal arms (14) which are articulatingly connected (at 13) to the chassis (1) so as to be allowed to oscillate about a horizontal axis extending transversally to the chassis (1), and about a median longitudinal axis,
characterized by the combination of the following features:
a) the chassis (1) is supported on the axle (6) through respective elastic suspension members (12) at two spaced apart points (107, 207) thereof,
b) each elastic suspension member (12) is integrated into one single unit in combination with an associated crane truck turnover-preventing device (26),
c) the chassis (1) is connected to the axle (6) so as to be shiftable away therefom to a limited degree, and each of the said units consisting of an elastic suspension member (12) and a crane truck turnover-preventing device (26), is fitted with means (24) for limiting the upward travel of the chassis (1) from the axle (6),
d) each elastic suspension member (2) consists of a set of springing discs (21) of an elastic material and preferably of rubber, plastics material, or the like, with a holding disc (22) of metal and preferably of steel, being interposed between every pair of successive springing discs (21),
e) the crane truck turnover-preventing device associated with each elastic suspension member (12), comprises an elastic member in form of cup springs (126), which are interposed between the respective suspension member (12) and the chassis (1), the said cup springs (126) being pre-loaded, with the crane truck in normal operative conditions, in the direction in which the chassis (1) is lifted away from the axle (6), to such a degree that when the crane truck load on the respective suspension member (12) has reached a predetermined minimum safety value surely preventing the crane truck from being turned over, the cup springs (12) will overcome the said load and will lift the chassis (1) from the axle (6) to a limited safe extent,
f) associated with the crane truck turnover-preventing device (26) are means (27) for detecting the upward travel of the chassis (1) from the axle (6), such as switches connected to a locking system against a crane truck turnover.

2. The crane truck according to claim 1, characterized in that the axle (6) is fitted with one connection stud (23) in each point (107, 207) at which the chassis (1) is supported, the chassis (1) being slidably mounted on the said connection studs (23), and the said connection studs (23) being provided at their upper end with preferably adjustable end-of-travel abutment means for limiting the upward travel of the chassis (1).

3. The crane truck according to claims 1 and 2, characterized in that the adjustable end-of-travel abutment means consist of: an abutment member (124) which is fitted on the upper end of each connection stud (23) and cooperates with the chassis (1), a shockproof pad (25) which is interposed between the chassis (1) and the abutment member (124), a split stop ring (224) which is placed on the abutment member (124), the said split stop ring (224) being fitted with means (324) for the said ring to be tightened on the connection stud (23).

4. The crane truck according to any one or more of the preceding claims, characterized in that the packs consisting of springing discs (21) and the interposed holding discs (22), are bored through their center and are threaded on the respective connection stud (23), the cup springs (126) forming part of the crane truck turnover-preventing device (26) being also threaded on the respective connection stud (23) and being received in a coaxial, rigid bushing (226) which is interposed between the chassis (1) and the respective pack of discs (21, 22).

5. The crane truck according to any one or more of the preceding claims, characterized in that the chassis (1) and the axle (6) are interconnected by a link (18) which is arranged substantially in the transverse direction of the chassis (1) and is articulantingly connected by the one end to the chassis (1), and by the other end to the axle (6), so as to be allowed to oscillate chiefly in a vertical plane, and substantially in any directions.

6. The crane truck according to claim 5, characterized in that the link (18) is eccentrically articulated with the axle (6), the point at which the link (18) is articulatingly connected to the chassis (1) being located on the opposite side of the chassis (1) relative to the median longitudinal axis thereof.

7. The crane truck according to claim 5 or claim 6, characterized in that the ends of link (18) are each engaged through a ball bearing (20) with a longitudinally arranged, relative pivot (19) which is carried by ear pairs (307, 301) respectively provided on the axle (6) and the chassis (1).

8. The crane truck according to any one or more of the preceding claims, characterized in that the means for articulatingly connecting the longitudinal arm (14) to the chassis (1) is in form of a horizontal pivot (15) extending transversally to the chassis (1) and being supported on the chassis (1) by a pair of plates (16), a vertical extension (114) of the longitudinal arm (14) being engaged through a ball bearing (17) with the said pivot (15).

9. The crane truck according to any one or more of the preceding claims, characterized in that the axle (6) is in form of a transversally extending beam (7) fitted with the steering wheels (5) at the free ends thereof, and carrying the steering system (9, 10, 11) which is controllable from an operating cab (2), a longitudinal arm (14) being fastened by welding or by means of possible stiffening plates (214) to the said beam (7), intermediately thereof, and the chassis being supported by its rear extension (101) on two separate points (107, 207) of beam (7).

10. The crane truck according to any one or more of the preceding claims, characterized in that the chassis (1) may be supported on the axle (6) at more than two points (107, 207), and an integrated unit comprising an elastic suspension member (12) and a crane truck turnover-preventing device (26) may be provided between the said axle (6) and the said chassis (1).

11. The crane truck according to any one or more of the preceding claims, characterized in that the axle (6) is fitted with only one median longitudinal arm (14) which is articulatingly connected to the chassis (1) at the vertical median longitudinal plane thereof, and the two points (107, 207) at which the chassis (1) is supported on the axle (6), are symmetrically disposed relative to the said median plane, and therefore relative to the barycenter of the said axle (6).

12. The crane truck according to any one or more of the preceding claims, characterized in that the axle (6) on which the chassis (1) is supported, is the rear axle that carries the crane truck steering wheels (5).

13. The crane truck according to any one or more of the preceding claims, characterized in that the elastic suspension members (12) may be, for example, in form of helical spiral springs of steel, cylindrical spiral springs of rubber, hydraulic cylinders, or the like.

## Patentansprüche

1. Ein Kranwagen dessen Chassis (1) auf mindestens einer mit Rädern, insbesondere lenkbaren Rädern (5) versehenen Achse (6) abgestützt ist, wobei die Achse (6), insbesondere die lenkbare Räder (5) tragende Achse (6) mit einem oder mehreren Längslenkerarmen (14) ausgerüstet ist, die gelenkig (bei Ziffer 13) mit dem Chassis (1) derart verbunden sind, daß sie um eine horizontale, sich quer zum Chassis (1) erstreckende Achse und um eine Längsmittelachse schwingen können, gekennzeichnet durch die Kombination folgender Merkmale:
a) das Chassis (1) ist auf der Achse (6) an zwei in einem Abstand voneinander an ihr angeordneten Punkten (107, 207) jeweils über elastische Abstützglieder (12) abgestützt;
b) jedes elastische Abstützglied (12) ist in Kombination mit einer zugeordneten Kranwagen-Kippsicherungsvorrichtung (26) in eine einzige Einheit integriert;
c) das Chassis (1) ist mit der Achse (6) derart verbunden, daß es von dieser um ein begrenztes Stück wegbewegbar ist, und jede der besagten, aus einem elastischen Abstützglied (12) und einer Kranwagen-Kippsicherungsvorrichtung (26) bestehenden Einheiten ist mit einem Mittel (24) zur Begrenzung der Aufwärtsbewegung des Chassis (1) von der Achse (6) weg versehen;
d) jedes elastische Abstützglied (12) besteht aus einem Satz aus federnden Platten (21) aus elastischem Material, vorzugsweise aus Gummi, Kunststoff oder dergleichen, wobei zwischen jedem Paar der aufeinanderfolgenden federnden Platten (21) eine Halteplatte (22) aus Metall, vorzugsweise aus Stahl, angeordnet ist;
e) die mit jedem elastischen Abstützglied (12) verbundene Kranwagen-Kippsicherungsvorrichtung besitzt ein elastisches Bauelement in Form von Tellerfedern (126), die zwischen das jeweilige Abstützglied (12) und das Chassis (1) eingeschaltet sind, wobei die besagten Tellerfedern (126) unter den normalen Betriebsbedingungen des Kranwagens in der Richtung, in welcher das Chassis (1) von der Achse (6) abgehoben wird, in einem solchen Grad vorgespannt sind, daß, wenn die Kranwagenlast auf dem jeweiligen Abstützglied (12) einen vorgegebenen Minimum-Sicherheitswert erreicht hat, der das Kippen des Kranwagens mit Sicherheit verhindert, die Tellerfedern (126) die besagte Last überwinden und das Chassis (1) in einem begrenzten Sicherheitsausmaß von der Achse (6) abheben;
f) der Kranwagen-Kippsicherungsvorrichtung (26) sind Mittel (27) zur Erfassung der Aufwärtsbewegung des Chassis (1) von der Achse (6) weg, wie z.B. mit einem Sicherungssystem gegen ein Kippen des Kranwagens verbundene Schalter, zugeordnet.

2. Der Kranwagen nach Anspruch 1, dadurch gekennzeichnet, daß die Achse (6) an jedem Punkt (107, 207), an welchem das Chassis (1) abgestützt ist, mit einem Verbindungsbolzen (23) ausgerüstet ist und das Chassis (1) gleitend auf dem besagten Verbindungsbolzen (23) montiert ist und die besagten Verbindungsbolzen (23) an ihrem oberen Ende mit einem vorzugsweise einstellbaren Endanschlagmittel zur Begrenzung der Aufwärtsbewegung des Chassis (1) versehen sind.

3. Der Kranwagen nach Anspruch 1 und 2, dadurch gekennzeichnet, daß die einstellbaren Endanschlagmittel aus: einem Anschlagglied (124), welches am oberen Ende jedes Verbindungsbolzens (23) angeordnet ist und mit dem Chassis (1) zusammenwirkt, einem stoßfesten Polster (25), welches zwischen das Chassis (1) und das Anschlagglied (124) eingeschaltet ist, und einem Spannring (224), der am Anschlagglied (124) angeordnet ist, besteht, wobei der besagte Spannring (224) mit einem Mittel (324) versehen ist, durch welches er auf dem Verbindungsbolzen (23) festgespannt ist.

4. Der Kranwagen nach einem oder mehreren der vorhergehenden Ansprüche, dadurch gekennzeichnet, daß die aus federnden Platten (21) und dazwischen geschalteten Halteplatten (22) bestehenden Stapel eine Mittelbohrung aufweisen, und auf den jeweiligen Verbindungsbolzen (23) aufgeschraubt sind, und die einen Teil der Kranwagen-Kippsicherungsvorrichtung (26) bildenden Tellerfedern (126) auch auf den jeweiligen Verbindungsbolzen (23) aufgeschraubt sind, und in einer koaxialen starren Hülse (226) enthalten sind, die zwischen das Chassis (1) und den jeweiligen Stapel von Platten (21, 22) eingeschaltet ist.

5. Der Kranwagen nach einem oder mehreren der vorhergehenden Ansprüche, dadurch gekennzeichnet, daß das Chassis (1) und die Achse (6) durch ein Verbindungsglied (18) miteinander verbunden sind, das im wesentlichen in Querrichtung zum Chassis (1) angeordnet und gelenkig an seinem einen Ende mit dem Chassis (1) und an seinem anderen Ende mit der Achse (6) verbunden ist, derart, daß es hauptsächlich in einer vertikalen Ebene und im wesentlichen in allen Richtungen schwingen kann.

6. Der Kranwagen nach Anspruch 5, dadurch gekennzeichnet, daß das Verbindungsglied (18) exzentrisch an der Achse (6) angelenkt ist und der Punkt, an welchem das Verbindungsglied (18) gelenkig mit dem Chassis (1) verbunden ist, in Bezug auf dessen Längsmittelachse auf der gegenüberliegenden Seite des Chassis (1) liegt.

7. Der Kranwagen nach Anspruch 5 oder 6, dadurch gekennzeichnet, daß die Enden des Verbindungsglieds (18) jeweils über ein Kugellager (20) an einem in Längsrichtung angeordneten Relativzapfen (19) angreifen, der von Ösenpaaren (307, 301) getragen ist, die jeweils an der Achse (6) und dem Chassis (1) angeordnet sind.

8. Der Kranwagen nach einem oder mehreren der vorhergehenden Ansprüche, dadurch gekennzeichnet, daß das Mittel zur gelenkigen Verbindung des Längslenkerarms (14) mit dem Chassis (1) die Gestalt eines horizontalen Gelenkzapfens (15) besitzt, der sich in Querrichtung zum Chassis (1) erstreckt und am Chassis (1) durch ein Paar Platten (16) gehaltert ist, wobei eine vertikale Verlängerung (114) des Längslenkerarms (14) über ein Kugellager (17) an dem besagten Gelenkzapfen (15) angreift.

9. Der Kranwagen nach einem oder mehreren der vorhergehenden Ansprüche, dadurch gekennzeichnet, daß die Achse (6) die Gestalt eines sich in Querrichtung erstreckenden Trägers (7) besitzt, der an seinem freien Ende mit den lenkbaren Rädern (5) ausgerüstet ist und der das Lenkungssystem (9, 10, 11) trägt, das von einem Bedienungsstand (2) aus steuerbar ist, wobei ein Längslenkerarm (14) durch Schweißen oder mittels möglicher Versteifungsbleche (214) zwischen diesen an dem besagten Träger (7) befestigt ist und das Chassis mit seiner hinteren Verlängerung (101) an zwei voneinander getrennten Punkten (107, 207) des Trägers (7) abgestützt ist.

10. Der Kranwagen nach einem oder mehreren der vorhergehenden Ansprüche, dadurch gekennzeichnet, daß das Chassis (1) auf der Achse (6) an mehr als zwei Punkten (107, 207) abgestützt sein kann und eine integrierte Einheit, die ein elastisches Abstützglied (12) und eine Kranwagen-Kippsicherungsvorrichtung (26) aufweist, zwischen der besagten Achse (6) und dem besagten Chassis (1) angeordnet sein kann.

11. Der Kranwagen nach einem oder mehreren der vorhergehenden Ansprüche, dadurch gekennzeichnet, daß die Achse (6) mit nur einem mittleren Längslenkerarm (14) versehen ist, der gelenkig mit dem Chassis (1) in dessen vertikaler Längsmittelebene verbunden ist und die beiden Punkte (107, 207), an denen sich das Chassis (1) auf der Achse (6) abstützt in Bezug auf die besagte Mittelebene und damit in Bezug auf den Schwerpunkt der besagten Achse (6) symmetrisch angeordnet sind.

12. Der Kranwagen nach einem oder mehreren der vorhergehenden Ansprüche, dadurch gekennzeichnet, daß die Achse (6), auf der das Chassis (1) abgestützt ist, die Hinterachse ist, welche die lenkbaren Räder (5) des Kranwagens trägt.

13. Der Kranwagen nach einem oder mehreren der vorhergehenden Ansprüche, dadurch gekennzeichnet, daß die elastischen Abstützglieder (12) beispielsweise die Gestalt einer Schraubenfeder aus Stahl, einer Zylinderfeder aus Gummi, eines Hydraulik-Zylinders oder dergleichen besitzen können.

## Revendications

1. Camion-grue dont le châssis (1) est en appui sur au moins un essieu (6) muni de roues, en particulier de roues directrices (5), l'essieu (6), notamment l'essieu (6) qui porte les roues directrices (5), étant équipé d'un ou plusieurs bras longitudinal (aux) (14) relié(s) au châssis (1), de manière articulée (en 13), pour pouvoir osciller autour d'un axe horizontal s'étendant transversalement par rapport au châssis (1), et autour d'un axe médian longitudinal,
caractérisé par la combinaison des particularités suivantes :
a) le châssis (1) est en appui sur l'essieu (6), par l'intermédiaire de pièces respectives (12) de suspension élastique, en deux points (107, 207) dudit châssis qui sont espacés l'un de l'autre,
b) chaque pièce (12) de suspension élastique est intégrée dans un ensemble unitaire, en combinaison avec un dispositif associé (26) empêchant une culbute du camion-grue,
c) le châssis (1) est relié à l'essieu (6) de façon à pouvoir être déplacé à l'écart de ce dernier, d'une distance limitée, et chacun desdits ensembles unitaires, comprenant une pièce (12) de suspension élastique et un dispositif (26) empêchant une culbute du camion-grue, est doté de moyens (24) pour limiter la course ascendante du châssis (1), à partir de l'essieu (6),
d) chaque pièce (2) de suspension élastique est constituée d'un jeu de disques amortisseurs (21) consistant en un matériau élastique et préférentiellement en du caoutchouc, une matière plastique ou matières similaires, un disque de retenue (22) en un métal, de préférence en de l'acier, étant interposé entre chaque paire de disques amortisseurs (21) successifs,
e) le dispositif, empêchant une culbute du camion-grue et associé à chaque pièce (12) de suspension élastique, comprend un élément élastique revêtant la forme de rondelles élastiques (126) qui sont interposées entre le châssis (1) et la pièce de suspension (12) respective, lesdites rondelles élastiques (126) étant préchargées, dans des conditions normales de service du camion-grue, dans la direction dans laquelle le châssis (1) est soulevé à l'écart de l'essieu (6), d'une distance telle que, lorsque la charge du camion-grue, agissant sur la pièce de suspension (12) considérée, a atteint une valeur de sûreté minimale prédéterminée empêchant, à coup sûr, une culbute du camion-grue, les rondelles élastiques (12) surmontent ladite charge et soulèvent le châssis (1), à l'écart de l'essieu (6), jusqu'à une distance de sûreté limitée,
f) des moyens (27) conçus pour détecter la course ascendante du châssis (1) à partir de l'essieu (6), tels que des commutateurs connectés à un système de verrouillage interdisant une culbute du camion-grue, sont associés au dispositif (26) empêchant une culbute du camion-grue.

2. Camion-grue selon la revendication 1, caractérisé par le fait que l'essieu (6) est pourvu d'une cheville de liaison (23) en chaque point (107, 207) auquel le châssis (1) est en appui, le châssis (1) étant monté coulissant sur lesdites chevilles de liaison (23), et lesdites chevilles de liaison (23) étant dotées, à leur extrémité supérieure, de moyens de butée en fin de course, préférentiellement réglables, pour limiter la course ascendante du châssis (1).

3. Camion-grue selon les revendications 1 et 2, caractérisé par le fait que les moyens réglables de butée en fin de course comprennent : une pièce de butée (124) qui est ajustée sur l'extrémité supérieure de chaque cheville de liaison (23) et coopère avec le châssis (1), un patin (25) résistant aux chocs et interposé entre le châssis (1) et la pièce de butée (124), une bague d'arrêt fendue (224), coiffant la pièce de butée (124), ladite bague d'arrêt fendue (224) étant munie de moyens (324) de serrage de ladite bague sur la cheville de liaison (23).

4. Camion-grue selon l'une quelconque ou plusieurs des revendications précédentes, caractérisé par le fait que les empilements, composés de disques amortisseurs (21) et des disques intercalaires de retenue (22), sont percés en leur centre et sont vissés sur la cheville de liaison (23) respective, les rondelles élastiques (126), faisant partie du dispositif (26) empêchant une culbute du camion-grue, étant également vissées sur la cheville de liaison (23) respective et étant logées dans un coussinet rigide coaxial (226), qui est interposé entre le châssis (1) et l'empilement de disques (21, 22) considéré.

5. Camion-grue selon l'une quelconque ou plusieurs des revendications précédentes, caractérisé par le fait que le châssis (1) et l'essieu (6) sont solidarisés par une biellette (18) qui est agencée, pour l'essentiel, dans le sens transversal du châssis (1) et est reliée au châssis (1) de manière articulée, par l'une de ses extrémités, et à l'essieu (6) par l'autre extrémité, afin de pouvoir osciller principalement dans un plan vertical, et sensiblement dans n'importe quelles directions.

6. Camion-grue selon la revendication 5, caractérisé par le fait que la biellette (18) est articulée sur l'essieu (6) de manière excentrée, le point, auquel la biellette (18) est reliée au châssis (1) de manière articulée, étant situé sur le côté opposé du châssis (1) par rapport à l'axe médian longitudinal de celui-ci.

7. Camion-grue selon la revendication 5 ou la revendication 6, caractérisé par le fait que les extrémités de la biellette (18) traversent chacune un roulement à billes (20) associé à un pivot respectif (19), disposé longitudinalement et supporté par des paires d'oreilles (307, 301) prévues, respectivement, sur l'essieu (6) et sur le châssis (1).

8. Camion-grue selon l'une quelconque ou plusieurs des revendications précédentes, caractérisé par le fait que le moyen, assurant la liaison articulée du bras longitudinal (14) avec le châssis (1), se présente comme un pivot horizontal (15) s'étendant transversalement par rapport au châssis (1) et prenant appui sur le châssis (1) par une paire de plaques (16), un prolongement vertical (114) du bras longitudinal (14) traversant un roulement à billes (17) associé audit pivot (15).

9. Camion-grue selon l'une quelconque ou plusieurs des revendications précédentes, caractérisé par le fait que l'essieu (6) revêt la forme d'un profilé (7) s'étendant transversalement, muni des roues directrices (5) à ses extrémités libres et portant le système de direction (9, 10, 11) pouvant être commandé à partir d'une cabine de manoeuvre (2), un bras longitudinal (14) étant assujetti audit profilé (7), à mi-longueur de ce dernier, par soudage ou au moyen d'éventuelles plaques de rigidification (214), et le châssis prenant appui, par son prolongement postérieur (101), sur deux points distincts (107, 207) du profilé (7).

10. Camion-grue selon l'une quelconque ou plusieurs des revendications précédentes, caractérisé par le fait que le châssis (1) peut prendre appui sur l'essieu (6) en plus de deux points (107, 207), et un ensemble unitaire intégré, comprenant une pièce (12) de suspension élastique et un dispositif (26) empêchant une culbute du camion-grue, peut être prévu entre ledit essieu (6) et ledit châssis (1).

11. Camion-grue selon l'une quelconque ou plusieurs des revendications précédentes, caractérisé par le fait que l'essieu (6) est doté d'un unique bras longitudinal médian (14) qui est relié au châssis (1) de manière articulée, dans le plan médian longitudinal vertical de ce dernier, et les deux points (107, 207), auxquels le châssis (1) est en appui sur l'essieu (6), sont disposés symétriquement par rapport audit plan médian, et donc par rapport au barycentre dudit essieu (6).

12. Camion-grue selon l'une quelconque ou plusieurs des revendications précédentes, caractérisé par le fait que l'essieu (6), sur lequel le châssis (1) est en appui, est l'essieu arrière qui porte les roues directrices (5) du camion-grue.

13. Camion-grue selon l'une quelconque ou plusieurs des revendications précédentes, caractérisé par le fait que les pièces (12) de suspension élastique peuvent se présenter, par exemple, comme des ressorts hélicoïdaux en acier, des ressorts spiroïdaux cylindriques en caoutchouc, des vérins hydrauliques ou éléments analogues.
